# EUROPÄISCHE PATENTSCHRIFT

(11) **EP 1 241 394 B1**
(45) Veröffentlichungstag und Bekanntmachung des Hinweises auf die Patenterteilung: **04.01.2006**
(21) Anmeldenummer: 02002823.9
(22) Anmeldetag: 08.02.2002
(51) Int. Cl.: F16L 55/04, F16L 55/053, F16D 25/12

(54) **Vorrichtung zur Reduzierung von Schwingungen in einem hydraulischen Kraftübertragungssystem**
Device for reducing the vibrations in a hydraulic power transmission system
Dispositif pour la réduction des vibrations dans un système hydraulique de transmission de puissance

(30) Priorität: 16.03.2001 DE 10112674
(43) Veröffentlichungstag der Anmeldung: 18.09.2002
(73) Patentinhaber: FTE automotive GmbH, 96106 Ebern (DE)
(72) Erfinder: Schorr, Rainer, 97437 Hassfurt (DE); Paeth, Karsten, 96106 Ebern-Unterpreppach (DE)
(74) Vertreter: Oppermann, Mark

(56) Entgegenhaltungen:
- CH-A- 203 378
- DE-A- 2 913 423
- FR-A- 2 611 023
- US-A- 5 070 983
- US-A- 5 655 569
- US-A- 5 820 227
- US-A- 6 029 694
- US-A- 6 032 651

## Beschreibung

Die vorliegende Erfindung bezieht sich auf eine Vorrichtung zur Reduzierung von Schwingungen in einem hydraulischen Kraftübertragungssystem gemäß dem Oberbegriff des Patentanspruchs 1. Insbesondere bezieht sich die Erfindung auf eine Vorrichtung zur Unterdrückung bzw. Reduzierung von Schwingungen des Kupplungspedals einer hydraulischen Kupplungsbetätigung in einem Kraftfahrzeug.

Eine herkömmliche hydraulische Kupplungsbetätigung hat einen Geberzylinder, der über ein Kupplungspedal betätigt werden kann und an einen Ausgleichsbehälter angeschlossen ist. Der Geberzylinder ist über eine Druckleitung mit einem Nehmerzylinder hydraulisch verbunden, so daß der durch Niedertreten des Kupplungspedals im Geberzylinder erzeugte Druck über die Flüssigkeitssäule in der Druckleitung auf den Nehmerzylinder übertragbar ist. Im Ergebnis wird das Ausrücklager der Kupplung von dem Nehmerzylinder mit einer Betätigungskraft beaufschlagt, um über einen Ausrückmechanismus die Kupplungsdruckplatte von der Kupplungsmitnehmerscheibe und somit den Verbrennungsmotor vom Getriebe des Kraftfahrzeugs zu trennen.

Bei derartigen hydraulischen Kupplungsbetätigungen, die als quasi-stationäre hydraulische Kraftübertragungssysteme betrachtet werden können, bei denen keine kontinuierliche Strömung der Hydraulikflüssigkeit vorliegt, tritt das Problem auf, daß Schwingungen vom Verbrennungsmotor über die Kupplungsdruckplatte, den Ausrückmechanismus, das Ausrücklager und die Flüssigkeitssäule in der Druckleitung zwischen dem Nehmerzylinder und dem Geberzylinder auf das Kupplungspedal übertragen werden, so daß das Kupplungspedal für den Fahrer wahrnehmbar vibriert, wenn er es zum Ausrücken der Kupplung niedertritt. Dabei werden die Schwingungen am Nehmerzylinder über die Flüssigkeitssäule in der Druckleitung als Druckpulsationen auf den Geberzylinder übertragen.

Zur Lösung dieser Problematik wurde in der gattungsbildenden DE 195 40 753 C1 der Anmelderin vorgeschlagen, einen Zusatzschwinger in die Druckleitung zwischen Nehmerzylinder und Geberzylinder zu schalten. Dieser Zusatzschwinger weist ein Gehäuse auf, dessen Boden und/oder Deckel von einer freischwingenden Membran ausgebildet ist, deren Rand am Gehäuse fest eingespannt ist und die zusammen mit dem Gehäuse eine Kammer begrenzt, welche über Anschlüsse mit dem Geberzylinder und dem Nehmerzylinder der hydraulischen Kupplungsbetätigung verbindbar ist, so daß die Membran von der Flüssigkeitssäule zwischen Geberzylinder und Nehmerzylinder beaufschlagt werden kann.

Wenn bei diesem Stand der Technik infolge einer niederfrequenten Erregerschwingung am Nehmerzylinder über die Flüssigkeitssäule zwischen Geberzylinder und Nehmerzylinder eine niederfrequente Druckpulsation übertragen wird, erregt diese Druckpulsation den in der Flüssigkeitssäule vorgesehenen, entsprechend abgestimmten Zusatzschwinger derart, daß der Zusatzschwinger mit seiner Eigenfrequenz schwingt, die höher ist als die Frequenz der niederfrequenten Druckpulsation, so daß der Zusatzschwinger in der Flüssigkeitssäule eine höherfrequente Druckpulsation induziert, der das aus Geberzylinder und Kupplungspedal bestehende schwingungsfähige System nicht folgen kann.

Die aus der DE 195 40 753 C1 bekannte Ausgestaltung bzw. Abstimmung des Zusatzschwingers hat u.a. den Vorteil, daß zur Schwingungsreduzierung eine geringere Volumenaufnahme erforderlich ist, verglichen mit den auf einem anderen Wirkprinzip beruhenden Lösungen gemäß beispielsweise der GB-PS 1 562 709 oder der US-PS 5 070 983, bei denen eine Membran, die zusammen mit einem Gehäuse eine mit der Flüssigkeitssäule kommunizierende Druckkammer begrenzt, den Druckpulsationen in der Flüssigkeitssäule lediglich folgt, um diese zu dämpfen. Mit der im Verhältnis größeren Volumenaufnahme gehen in stärkerem Maße unerwünschte Auskuppelverluste einher, welche bei Betätigung des Kupplungspedals für den Fahrer insbesondere als Weichheit der Kupplungsbetätigung, Hubvergrößerung am Kupplungspedal und fehlender Druckpunkt bemerkbar sind.

Infolge der wirkprinzipbedingten Verringerung der Volumenaufnahme gemäß dem Stand der Technik nach der DE 195 40 753 C1 sind zudem auf der druckkammerabgewandten Seite der Membran befindliche Anschlagflächen für die Membran entbehrlich, wie sie nach der Offenbarung der US-PS 5 070 983 z.B. in Form eines Vorsprungs oder einer Tellerfeder vorgesehen sind, um eine übermäßige Auswölbung der druckbeaufschlagten Membran zu verhindern.

Eine weitere Vorrichtung zur Reduzierung von Schwingungen in einem hydraulischen Kraftübertragungssystem ist aus der US-A-5,655,569 bekannt. Diese Vorrichtung basiert auf einer Membran, die über eine gasgefüllte Kammer an eine gehäuseseitige Stützfläche gedrückt ist.

Es hat sich in der Praxis jedoch gezeigt, daß der Zusatzschwinger gemäß der DE 195 40 753 C1 für bestimmte Anwendungsfälle hinsichtlich Ansprechverhalten und Volumenaufnahme noch verbesserungsbedürftig ist. Der vorliegenden Erfindung liegt daher die Aufgabe zugrunde, ausgehend vom Stand der Technik nach der DE 195 40 753 C1 eine einfach ausgebildete Vorrichtung zur Reduzierung von Schwingungen in einem hydraulischen Kraftübertragungssystem zu schaffen, welche leicht hinsichtlich Ansprechverhalten und Volumenaufnahme den jeweiligen Erfordernissen entsprechend angepaßt werden kann.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 18.

Erfindungsgemäß ist bei einer Vorrichtung zur Reduzierung von Schwingungen in einem hydraulischen Kraftübertragungssystem, welches einen Geberzylinder und einen damit über eine Flüssigkeitssäule verbundenen Nehmerzylinder aufweist, mit einem Gehäuse und einer Membran, die mit ihrem Rand am Gehäuse befestigt ist, wobei das Gehäuse und die Membran eine Kammer begrenzen, welche über einen Anschluß mit dem Geberzylinder und über einen weiteren Anschluß mit dem Nehmerzylinder verbindbar ist, so daß die Membran von der Flüssigkeitssäule zwischen Geberzylinder und Nehmerzylinder hydraulisch beaufschlagbar ist, die Membran zumindest im Ruhezustand des hydraulischen Kraftübertragungssystems mittels eines Federelements entgegen der Richtung der hydraulischen Beaufschlagung der Membran an eine kammerseitige Stützfläche gedrückt, wobei das Federelement die Membran an einem mittigen Abschnitt beaufschlagt und die Membran wenigstens in einem Ringbereich zum Schwingen anregbar ist, der sich in radialer Richtung gesehen zwischen der Stützfläche und dem am Gehäuse befestigten Rand der Membran befindet.

Infolge dieser definierten Federbeaufschlagung und der damit einhergehenden erschwerten Auslenkbarkeit der Membran wird bei ansonsten gleicher Geometrie und gleichem Werkstoff der Membran die Volumenaufnahme der Vorrichtung gegenüber dem gattungsbildenden Stand der Technik verringert bzw. kann durch geeignete Auswahl oder Auslegung des Federelements den jeweiligen Erfordernissen entsprechend im Sinne eines Baukastensystems auf einfache Weise an gegebene Systemverhältnisse angepaßt werden. Untersuchungen der Anmelderin haben hier zu dem überraschenden Ergebnis geführt, daß bei der erfindungsgemäßen Ausbildung der Vorrichtung dennoch eine Schwingungsreduzierung erfolgt, die mit der Schwingungsreduzierung vergleichbar ist, welche mit der freischwingenden Membran gemäß der gattungsbildenden DE 195 40 753 C1 erzielt wird. Es wird davon ausgegangen, daß das Wirkprinzip der erfindungsgemäßen Vorrichtung hierbei dem des gattungsbildenden Stands der Technik entspricht, wobei je nach Auswahl oder Auslegung von Membran und Federelement sowie den auftretenden Amplituden der Druckpulsation in der Flüssigkeitssäule das aus Membran und Federelement bestehende System oder lediglich die Membran in ihren "freien" Bereichen schwingt, d.h. den Bereichen, die nicht direkt von dem Federelement beaufschlagt werden bzw. sich nicht unmittelbar zwischen dem Federelement und der kammerseitigen Stützfläche befinden.

Des weiteren wird durch das Federelement und die kammerseitige Stützfläche eine mechanische Abstützung der Membran erzielt, welche den Einsatz von Membranen mit verringerter Dicke und/oder größerem Durchmesser gestattet, ohne die Gefahr einer mechanischen Überbeanspruchung der Membran. Durch die somit mögliche Vergrößerung des Verhältnisses von Durchmesser zu Dicke der Membran können in vorteilhafter Weise die Hysterese der Vorrichtung, d.h. deren Druckverlust, sowie die Elastizität der Vorrichtung, d.h. das Verhältnis von Druckverlust zu Volumenaufnahme, verkleinert bzw. den jeweiligen Erfordernissen entsprechend angepaßt werden, wie noch näher beschrieben werden wird, wodurch die Vorrichtung sensibler auf Druckstöße in der Flüssigkeitssäule reagieren kann und ein verbessertes Ansprechverhalten sowie eine insgesamt bessere schwingungsreduzierende Wirkung aufweist.

Gemäß dem Patentanspruch 2 weist das Gehäuse vorzugsweise einen sich mittig von einem Boden der Kammer in Richtung der Membran erstreckenden Vorsprung auf, der auf einfache Weise die Stützfläche für die Membran ausbildet.

Nach der Lehre des Patentanspruchs 3 hat das Gehäuse zweckmäßig eine die Kammer konzentrisch umgebende Ringnut zur Aufnahme eines an der Membran anliegenden Dichtelements, welches die Kammer zur Umgebung hin abdichtet. Vorzugsweise weist das Gehäuse entsprechend dem Patentanspruch 4 zwischen der Kammer und der Ringnut einen ringzylindrischen Abschnitt auf, an dem die Membran zumindest im Ruhezustand des hydraulischen Kraftübertragungssystems anliegt, wobei der ringzylindrische Abschnitt mit mindestens einem verbindungskanal versehen ist, der die Kammer mit der Ringnut verbindet, so daß bei der Montage der Vorrichtung in dem hydraulischen Kraftübertragungssystem ein sicheres Befüllen der Kammer mit Hydraulikflüssigkeit möglich ist, ohne daß Lufteinschlüsse in der Ringnut verbleiben.

Gemäß dem Patentanspruch 5 liegen eine Stirnfläche des ringzylindrischen Abschnitts und die Stützfläche am Vorsprung in einer Ebene, so daß die durch das Federelement belastete Membran im Ruhezustand des hydraulischen Kraftübertragungssystems vorteilhaft eben gehalten ist. Den jeweiligen Erfordernissen entsprechend ist es aber auch möglich, zwischen der Stützfläche am Vorsprung und der Stirnfläche am ringzylindrischen Abschnitt in axialer Richtung der Vorrichtung einen Versatz vorzusehen und/oder die Stützfläche am Vorsprung und/oder die Stirnfläche am ringzylindrischen Abschnitt abzuschrägen bzw. gewölbt auszubilden, so daß die Membran konvex oder konkav gebogen unter einer definierten Vorspannung gehalten ist.

Der Patentanspruch 6 sieht vor, daß am im wesentlichen topfförmigen Gehäuse ein Deckel vorgesehen ist, der zusammen mit dem Gehäuse die Membran an ihrem Rand einspannt, wobei sich das Federelement mit seinem von der Membran abgewandten Ende am Deckel abstützt. Ein solcher Deckel kann nicht nur auf einfache und stabile Weise das für das Federelement benötigte Widerlager ausbilden, sondern auch dafür sorgen, daß das hydraulische Kraftübertragungssystem, in dem die Vorrichtung eingebaut ist, bei einer Beschädigung der Membran nicht auslaufen kann und somit nicht ausfällt.

Grundsätzlich ist es möglich, den Deckel mittels beispielsweise eines Bajonettverschlusses am Gehäuse zu befestigen oder Gehäuse und Deckel miteinander zu verschweißen. Bevorzugt wird jedoch die Ausgestaltung entsprechend dem Patentanspruch 7, gemäß der der Deckel mittels einer Gewindeverbindung am Gehäuse befestigt ist, wobei der Deckel einen Außengewindeabschnitt hat, der in einen Innengewindeabschnitt des Gehäuses einschraubbar ist. Eine solche Gewindeverbindung ermöglicht zum einen eine einfache Austauschbarkeit der Membran. Zum anderen lassen sich mittels einer Gewindeverbindung die Halte- bzw. Einspannkräfte für die Membran definiert einstellen.

Nach der Lehre des Patentanspruchs 8 ist die Gewindeverbindung vorzugsweise sowohl sägen- als auch rundgewindeähnlich ausgebildet, derart, daß zumindest der Innengewindeabschnitt des Gehäuses am Außendurchmesser des Gewindeprofils rundgewindeähnlich gerundet ist und am Innendurchmesser des Gewindeprofils eine gerundete sägengewindeähnliche Form aufweist. Werden Gehäuse und Deckel wie im Patentanspruch 17 angegeben aus Kunststoff spritzgegossen, läßt sich eine solche Gewindeverbindung leicht mit ausbilden. Darüber hinaus bietet die oben beschriebene Gewindeverbindung Vorteile dahingehend, daß infolge der sägengewindeähnlichen Ausbildung am Innendurchmesser des Gewindeprofils am Gehäuse gegenüber den üblichen Trapezgewinden eine größere Gewindetragtiefe erzielbar ist, während die rundgewindeähnliche Ausbildung am Außendurchmesser des Gewindeprofils am Gehäuse gegenüber den herkömmlichen Trapezgewinden für eine Verringerung der Kerbwirkung sorgt, was insbesondere bei Kunststoff als Gehäusewerkstoff für die Dauerfestigkeit des Gehäuses von Bedeutung ist.

Gemäß dem Patentanspruch 9 hat der Deckel vorzugsweise einen mittigen Aufnahme- und Führungsabschnitt für das Federelement, der auf einfache Weise verhindert, daß sich das Federelement in der Vorrichtung in radialer Richtung verlagert und somit in unbeabsichtigter Weise die Membran an unterschiedlichen Stellen beaufschlagt.

Grundsätzlich kann es sich bei dem Federelement um einen Federring oder eine Tellerfeder handeln. Bevorzugt ist jedoch der Einsatz einer Schraubendruckfeder, wie im Patentanspruch 10 angegeben.

Der Patentanspruch 11 sieht vor, daß das Federelement konzentrisch von einer Bundbüchse umgeben ist, die einen Ringbund aufweist, der zwischen dem der Membran zugewandten Ende des Federelements und der Membran angeordnet ist. Hierdurch kann auf einfache Weise verhindert werden, daß etwaige scharfkantige Bereiche des Federelements die Membran beschädigen. Die der Membran zugewandte Stirnfläche des Ringbunds kann beispielsweise ballig ausgebildet sein. Insbesondere aus herstellungstechnischer Sicht bevorzugt ist jedoch eine ebene Ausbildung dieser Stirnfläche, wie im Patentanspruch 12 angegeben.

Entsprechend der Lehre des Patentanspruchs 13 ist die Bundbüchse zweckmäßig in dem Aufnahme- und Führungsabschnitt des Deckels axial bewegbar geführt. Vorzugsweise ist die Bundbüchse hierbei an ihrem von der Membran abgewandten Ende außenumfangsseitig mit einem umlaufenden Vorsprung versehen, während der Aufnahme- und Führungsabschnitt des Deckels an seinem der Membran zugewandten Ende innenumfangsseitig einen umlaufenden Vorsprung aufweist, wobei der umlaufende Vorsprung der Bundbüchse einen Außendurchmesser hat, der geringfügig größer ist als der Innendurchmesser des umlaufenden Vorsprungs am Aufnahme- und Führungsabschnitt des Deckels, wie im Patentanspruch 14 angegeben. Diese Ausgestaltung von Deckel und Bundbüchse vereinfacht zum einen den Zusammenbau der Vorrichtung, weil die Bundbüchse nach Aufnahme des Federelements im Aufnahme- und Führungsabschnitt des Deckels mit dem Aufnahme- und Führungsabschnitt verrastet werden kann, so daß beim Einschrauben / Befestigen des Deckels in das / am Gehäuse nicht eine Mehrzahl von Einzelteilen zu handhaben ist. Zum anderen sorgen die umlaufenden Vorsprünge an Bundbüchse und Aufnahme- und Führungsabschnitt des Deckels für eine definierte und leichtgängige Führung der Bundbüchse im Aufnahme- und Führungsabschnitt des Deckels.

Zweckmäßig besteht die Membran entsprechend dem Patentanspruch 15 aus Federstahl. Mit einer Federstahl-Membran, deren Verhältnis von Durchmesser zu Dicke der Membran vorzugsweise zwischen 40 und 160, mehr bevorzugt zwischen 60 und 90 liegt, wie im Patentanspruch 16 angegeben, konnten mit der erfindungsgemäßen Vorrichtung besonders gute Ergebnisse bei der Reduzierung von Schwingungen in einer hydraulischen Kupplungsbetätigung erzielt werden.

Nach der Lehre des Patentanspruchs 17 ist das Gehäuse und/oder der Deckel und/oder die Bundbüchse vorzugsweise aus Kunststoff spritzgegossen. Im gattungsbildenden Stand der Technik wurde als Material für das Gehäuse des Zusatzschwingers eine Aluminium-Knetlegierung eingesetzt, wobei das Halbzeug für das Gehäuse stranggepreßt, sodann abgelängt und schließlich spanend bearbeitet worden ist. Beim Spritzgießen aus Kunststoff hingegen kann das Gehäuse vorteilhaft in einem Arbeitsgang werkzeugfallend, d.h. ohne weitere Nachbearbeitungsschritte fertig ausgebildet werden. Es ist ersichtlich, daß durch diese Materialsubstitution die Produktivität erheblich gesteigert und die Herstellkosten für das Gehäuse wesentlich verringert werden können.

Entsprechend dem Patentanspruch 18 ist die erfindungsgemäße Vorrichtung bei einem hydraulischen Kraftübertragungssystem schließlich derart in die Flüssigkeitssäule zwischen Nehmerzylinder und Geberzylinder geschaltet, daß sie mit ihrem entsprechenden Anschluß unmittelbar mit dem Geberzylinder steckverbunden ist oder alternativ dazu ihr Gehäuse integraler Bestandteil des Gehäuses des Geberzylinders ist. Im Rahmen der Erprobung der erfindungsgemäßen Vorrichtung konnte hier die Erkenntnis gewonnen werden, daß die schwingungsreduzierende Wirkung der erfindungsgemäßen, infolge der Federbeaufschlagung der Membran gegenüber dem gattungsbildenden Stand der Technik steiferen Vorrichtung um so besser ist je näher sie am Geberzylinder angeordnet ist.

Im folgenden wird die Erfindung anhand eines bevorzugten Ausführungsbeispiels unter Bezugnahme auf die beigefügte Zeichnung näher erläutert. Darin zeigen:
- Fig. 1: eine Schnittansicht einer erfindungsgemäßen Vorrichtung zur Reduzierung von Schwingungen in einem hydraulischen Kraftübertragungssystem im zusammengebauten Zustand, wobei die schwingfähige Membran nicht hydraulisch druckbeaufschlagt ist,
- Fig. 2: eine Explosionsdarstellung der in Fig. 1 gezeigten Vorrichtung,
- Fig. 3: ein Diagramm, in dem die Volumenaufnahme V einer Vorrichtung zur Reduzierung von Schwingungen idealisiert als Funktion des Drucks P aufgetragen ist und das den Einfluß eines die Membran entgegen der Druckbeaufschlagungsrichtung belastenden Federelements auf die Volumenaufnahme V veranschaulicht, und
- Fig. 4: ein Diagramm, in dem die Volumenaufnahme V einer Vorrichtung zur Reduzierung von Schwingungen idealisiert als Funktion des Drucks P aufgetragen ist und das die Hysterese der Vorrichtung für eine theoretische Betriebsstrecke veranschaulicht.

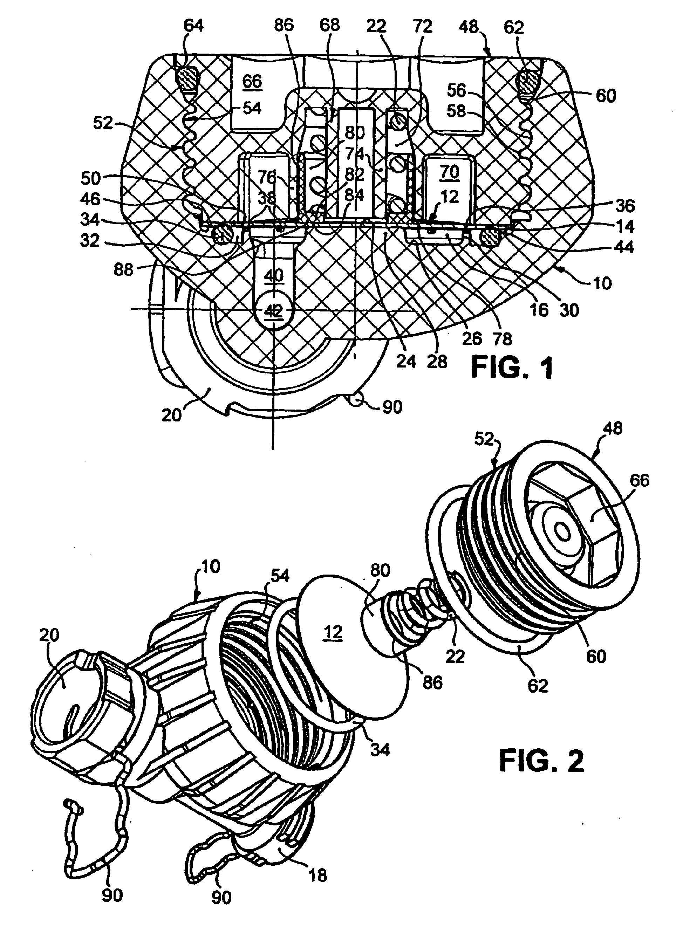

Die Fig. 1 und 2 zeigen eine Vorrichtung zur Reduzierung von Schwingungen, die in ein hydraulisches Kraftübertragungssystem (nicht dargestellt) einbaubar ist, welches einen Geberzylinder und einen damit über eine Flüssigkeitssäule verbundenen Nehmerzylinder aufweist. Die Vorrichtung weist ein Gehäuse 10 und eine Membran 12 auf, welche mit ihrem Rand 14 auf noch zu beschreibende Weise am Gehäuse 10 befestigt ist. Das Gehäuse 10 und die Membran 12 begrenzen eine Druckkammer 16, die über einen Anschluß 20 mit dem hier nicht gezeigten Geberzylinder und über einen weiteren Anschluß 18 mit dem ebenfalls nicht dargestellten Nehmerzylinder verbunden werden kann, so daß die Membran 12 von der Flüssigkeitssäule zwischen Geberzylinder und Nehmerzylinder hydraulisch beaufschlagbar ist. Wesentlich ist, daß die Membran 12 zumindest im Ruhezustand des hydraulischen Kraftübertragungssystems mittels eines Federelements 22 entgegen der Richtung der hydraulischen Beaufschlagung der Membran 12, d.h. in Fig. 1 nach unten an eine kammerseitige Stützfläche 24 gedrückt ist.

Zum Wirkprinzip der hier beschriebenen Vorrichtung sei an dieser Stelle angemerkt, daß die in ein hydraulisches Kraftübertragungssystem eingebaute Vorrichtung weniger dazu dient, die Druckamplituden der über den Nehmerzylinder in der Flüssigkeitssäule induzierten Druckpulsation zu dämpfen, als die Frequenz der Erregerschwingung derart zu modulieren bzw. die Erregerschwingung derart in höherfrequentere Bereiche zu verschieben, daß am Ausgang der Vorrichtung bzw. am Geberzylinder eine höherfrequente Schwingung ansteht. Das aus Geberzylinder und einem Betätigungselement wie einem Kupplungspedal bestehende schwingungsfähige System kann dieser höherfrequenten Schwingung aufgrund seiner Trägheit nicht folgen und bleibt daher in Ruhe. Weitere Einzelheiten zum grundsätzlichen Wirkprinzip der hier beschriebenen Vorrichtung, die auch als Frequenzmodulator bezeichnet werden kann, können der gattungsbildenden DE 195 40 753 C1 der Anmelderin entnommen werden.

Wie insbesondere die Fig. 1 zeigt, hat das im dargestellten Ausführungsbeispiel aus Kunststoff spritzgegossene, im wesentlichen topfförmige Gehäuse 10 einen sich mittig von einem ebenen Boden 26 der Kammer 16 in Richtung der Membran 12 erstreckenden zylindrischen Vorsprung 28, der die Stützfläche 24 ausbildet. Der Vorsprung 28 begrenzt die Kammer 16 nach radial innen, so daß die Kammer 16 eine Ringform aufweist. Nach radial außen ist die Kammer 16 durch einen ringzylindrischen Abschnitt 30 begrenzt, an den sich eine die Kammer 16 konzentrisch umgebende Ringnut 32 anschließt. Die Ringnut 32 dient der Aufnahme eines an der Membran 12 anliegenden elastischen Dichtelements 34, wie eines O-Rings, welches die Kammer 16 zur Umgebung hin abdichtet. Der Einfachheit halber ist das Dichtelement 34 in Fig. 1 im unverformten Zustand dargestellt. Durch Aufnahme des Dichtelements 34 in der Ringnut 32 wird insbesondere während des Zusammenbaus der Vorrichtung für eine definierte Lage des Dichtelements 34 gesorgt, so daß dieses nicht beschädigt werden kann.

Zumindest im Ruhezustand des hydraulischen Kraftübertragungssystems liegt die Membran 12 an dem ringzylindrischen Abschnitt 30 zwischen der Kammer 16 und der Ringnut 32 an. Die der Membran 12 zugewandte Stirnfläche 36 des ringzylindrischen Abschnitts 30 liegt mit der Stützfläche 24 am Vorsprung 28 in einer Ebene, so daß die durch das Federelement 22 belastete Membran 12 hier eben gehalten ist. Der ringzylindrische Abschnitt 30 ist des weiteren ausgehend von seiner Stirnfläche 36 mit einer Mehrzahl von gleichmäßig am Umfang verteilten, radial verlaufenden Verbindungskanälen 38 versehen. Die Verbindungskanäle 38 verbinden die Kammer 16 mit der Ringnut 32 und verhindern somit, daß beim Befüllen der Kammer 16 mit Hydraulikflüssigkeit Lufteinschlüsse in der Ringnut 32 verbleiben.

Ausgehend vom Boden 26 der Kammer 16 erstreckt sich in axialer Richtung der Vorrichtung ein Verbindungskanal 40. Der Verbindungskanal 40 mündet in einer quer verlaufenden Durchgangsbohrung 42, welche die Anschlüsse 18 und 20 miteinander verbindet. Es ist ersichtlich, daß die ringförmige Kammer 16, deren Volumen nach Untersuchungen der Anmelderin für die Funktion der Vorrichtung von untergeordneter Bedeutung ist, quasi parallel zur Flüssigkeitssäule geschaltet ist, welche im Betrieb des hydraulischen Kraftübertragungssystems durch die Durchgangsbohrung 42 hindurch geschoben wird.

An die Ringnut 32 zur Aufnahme des Dichtelements 34 schließt sich nach radial außen ein weiterer ringzylindrischer Abschnitt 44 an. Die der Membran 12 zugewandte Stirnfläche 46 des weiteren ringzylindrischen Abschnitts 44, welche im dargestellten Ausführungsbeispiel mit der Stirnfläche 36 des ringzylindrischen Abschnitts 30 und der Stützfläche 24 des zentralen Vorsprungs 28 in einer Ebene liegt, dient beim Einspannen der Membran 12 als Widerlager für den Rand 14 der Membran 12.

Wie insbesondere die Fig. 1 zeigt, ist am Gehäuse 10 ein im dargestellten Ausführungsbeispiel ebenfalls aus Kunststoff spritzgegossener Deckel 48 vorgesehen. Der Deckel 48 weist eine Ringfläche 50 auf, mittels der die Membran 12 an ihrem Rand 14 gegen die Stirnfläche 46 des ringzylindrischen Abschnitts 44 am Gehäuse 10 gehalten ist, um die Membran 12 hier definiert einzuspannen.

Der Deckel 48 ist mittels einer Gewindeverbindung am Gehäuse 10 befestigt, wobei der Deckel 48 einen Außengewindeabschnitt 52 hat, der in einen Innengewindeabschnitt 54 des Gehäuses 10 eingeschraubt ist. Im dargestellten Ausführungsbeispiel ist die Gewindeverbindung zur Erhöhung der Tragtiefe und zur Verringerung der Kerbwirkung sowohl sägen- als auch rundgewindeähnlich ausgebildet, wobei der Innengewindeabschnitt 54 des Gehäuses 10 am Außendurchmesser 56 des Gewindeprofils rundgewindeähnlich gerundet ist und am Innendurchmesser 58 des Gewindeprofils eine gerundete sägengewindeähnliche Form aufweist. Der Außengewindeabschnitt 52 am Deckel 48 ist komplementär zu dem Innengewindeabschnitt 54 des Gehäuses 10 ausgebildet.

In Fig. 1 nach oben anschließend an den Außengewindeabschnitt 52 hat der Deckel 48 eine Ringnut 60 zur Aufnahme eines elastischen Dichtelements 62, beispielsweise eines O-Rings, welches zur Vereinfachung der Darstellung ebenfalls im unverformten Zustand gezeigt ist. Das Dichtelement 62 wirkt im in das Gehäuse 10 eingeschraubten Zustand des Deckels 48 mit einem konischen Dichtabschnitt 64 des Gehäuses 10 zusammen, um das Innere des Gehäuses 10 gegenüber der Umgebung abzudichten. Es ist ersichtlich, daß bei dieser Ausgestaltung der Vorrichtung selbst im Versagensfalle der Membran 12 ein Auslaufen von Hydraulikflüssigkeit aus der Vorrichtung verhindert wird, wobei zwar die schwingungsreduzierende Wirkung der Vorrichtung nicht mehr gegeben ist, ein Ausfall des hydraulischen Kraftübertragungssystems, in dem die Vorrichtung eingebaut ist, aber vermieden wird.

Ausgehend von seiner Außenfläche ist der Deckel 48 mittig mit einem Innenmehrkant 66 versehen, an dem mit einem Werkzeug (nicht dargestellt) angegriffen werden kann, um den Deckel 48 in das Gehäuse 10 einzuschrauben. An seiner Innenfläche ist der Deckel 48 als Widerlager ausgebildet, an dem sich das Federelement 22 mit seinem von der Membran 12 abgewandten Ende abstützen kann.

Genauer gesagt hat der Deckel 48 hier einen mittigen Aufnahme- und Führungsabschnitt 68, welcher konzentrisch von einem Ringraum 70 umgeben ist. Der Aufnahme- und Führungsabschnitt 68 weist einen Ringraum 72 zur Aufnahme des Federelements 22 auf. Der Ringraum 72 ist nach radial innen von einem zentralen, hohlzylindrischen Vorsprung 74 begrenzt, welcher sich nur so nahe an die Membran 12 heran erstreckt, daß die Membran 12 im Betrieb des hydraulischen Kraftübertragungssystems nicht an dem Vorsprung 74 zur Anlage gelangen kann. Der Vorsprung 74 des Aufnahme- und Führungsabschnitts 68 dient dazu, das im Ringraum 72 aufgenommene Federelement 22, im dargestellten Ausführungsbeispiel eine Schraubendruckfeder, radial innen zu führen.

Nach radial außen ist der Ringraum 72 durch einen ringzylindrischen Abschnitt 76 begrenzt, der die Ringräume 70 und 72 voneinander trennt. Die Stirnfläche 78 des ringzylindrischen Abschnitts 76 ist nach radial innen abgeschrägt und von der Membran 12 beabstandet. Der ringzylindrische Abschnitt 76 des Aufnahme- und Führungsabschnitts 68 dient dazu, radial innen eine das Federelement 22 konzentrisch umgebende Bundbüchse 80 axial bewegbar zu führen.

Die Bundbüchse 80 ist im dargestellten Ausführungsbeispiel ebenfalls aus Kunststoff spritzgegossen und weist einen sich nach radial innen erstreckenden Ringbund 82 auf, der zwischen dem der Membran 12 zugewandten Ende des Federelements 22 und der Membran 12 angeordnet ist, um eine Beschädigung der Membran 12 durch das Federelement 22 zu verhindern, das Gleitverhalten zwischen Federelement 22 und Membran 12 zu verbessern und für eine definierte Kraftbeaufschlagung der Membran 12 durch das Federelement 22 zu sorgen. Hierbei ist die der Membran 12 zugewandte Stirnfläche 84 des Ringbunds 82 eben ausgebildet. Der Außendurchmesser der Bundbüchse 80 ist lediglich geringfügig größer gehalten als der Außendurchmesser des die Stützfläche 24 ausbildenden Vorsprungs 28 am Gehäuse 10.

Weiterhin ist die Bundbüchse 80 an ihrem von der Membran 12 abgewandten Ende außenumfangsseitig mit einem umlaufenden Vorsprung 86 bzw. einer umlaufenden Rippe versehen, während der Aufnahme- und Führungsabschnitt 68 des Deckels 48, genauer gesagt dessen ringzylindrischer Abschnitt 76 an seinem der Membran 12 zugewandten Ende innenumfangsseitig einen umlaufenden Vorsprung 88 bzw. eine umlaufende Rippe aufweist. Der umlaufende Vorsprung 86 der Bundbüchse 80 hat einen Außendurchmesser, der geringfügig größer ist als der Innendurchmesser des umlaufenden Vorsprungs 88 am Aufnahme- und Führungsabschnitt 68 des Deckels 48, so daß die Bundbüchse 80 im Aufnahme- und Führungsabschnitt 68 des Deckels 48 verrastet werden kann.

Schließlich ist in Fig. 2 noch zu erkennen, daß die Anschlüsse 18 und 20 des an seinem Außenumfang zur besseren Handhabung verrippten Gehäuses 10 als Steckanschlüsse ausgebildet sind, die jeweils mittels eines metallischen Sicherungselements 90 unmittelbar mit dem nicht gezeigten Zylinder bzw. mit einer ebenfalls nicht dargestellten Rohrarmatur des hydraulischen Kraftübertragungssystems dicht und lösbar verbunden werden können. Eine besonders gute schwingungsreduzierende Wirkung der Vorrichtung konnte im übrigen erzielt werden, wenn die Vorrichtung in räumlicher Nähe zum Geberzylinder angeordnet bzw. mit ihrem entsprechenden Anschluß 20 unmittelbar an den Geberzylinder angeschlossen wurde. Alternativ dazu ist es denkbar, das Gehäuse der Vorrichtung einstückig mit dem Gehäuse des Geberzylinders auszubilden.

Aus der obigen Beschreibung ist ersichtlich, daß die Membran 12 an einem mittigen Abschnitt zumindest im Ruhezustand des hydraulischen Kraftübertragungssystems über die Stirnfläche 84 des Ringbunds 82 der Bundbüchse 80 mit einer durch die Vorspannung des Federelements 22 definierten Kraft gegen die Stützfläche 24 des Vorsprungs 28 am Gehäuse 10 gedrückt ist. Hierdurch wird die Volumenaufnahme der Vorrichtung verglichen mit der Volumenaufnahme einer Vorrichtung ohne entsprechendes Federelement reduziert. Zudem erfährt die Membran 12 eine mechanische Abstützung, die es gestattet, den Durchmesser der Membran 12 zu vergrößern und/oder die Dicke der Membran 12 zu verringern, ohne die Gefahr eines Versagens der Membran 12 im Betrieb. Nach Untersuchungen der Anmelderin sollte die durch das Federelement 22 beaufschlagte, vorzugsweise aus Federstahl bestehende Membran 12 hier ein Verhältnis von Durchmesser zu Dicke der Membran 12 aufweisen, das zwischen 40 und 160 liegt, mehr bevorzugt zwischen 60 und 90. Durch die somit mögliche Vergrößerung des Verhältnisses von Durchmesser zu Dicke der Membran 12 werden die Hysterese und die Elastizität der Vorrichtung in dem Sinne verbessert, als die Vorrichtung sensibler auf Anregerschwingungen reagieren kann. Je nach Auslegung der Vorrichtung hinsichtlich der Vorspannung des Federelements 22, des Durchmessers und/oder der Dicke der Membran 12 - welche Parameter eine individuelle Anpassung an das hydraulische Kraftübertragungssystem, in das die Vorrichtung eingebaut werden soll, ermöglichen - sowie den Amplituden der Druckpulsation, die in der Flüssigkeitssäule des hydraulischen Kraftübertragungssystems auftritt, wird entweder das aus Membran 12, Bundbüchse 80 und Federelement 22 bestehende System oder nur die Membran 12 in einem Ringbereich zum Schwingen angeregt, der sich in radialer Richtung gesehen zwischen der Stützfläche 24 und dem eingespannten Rand 14 der Membran 12 befindet.

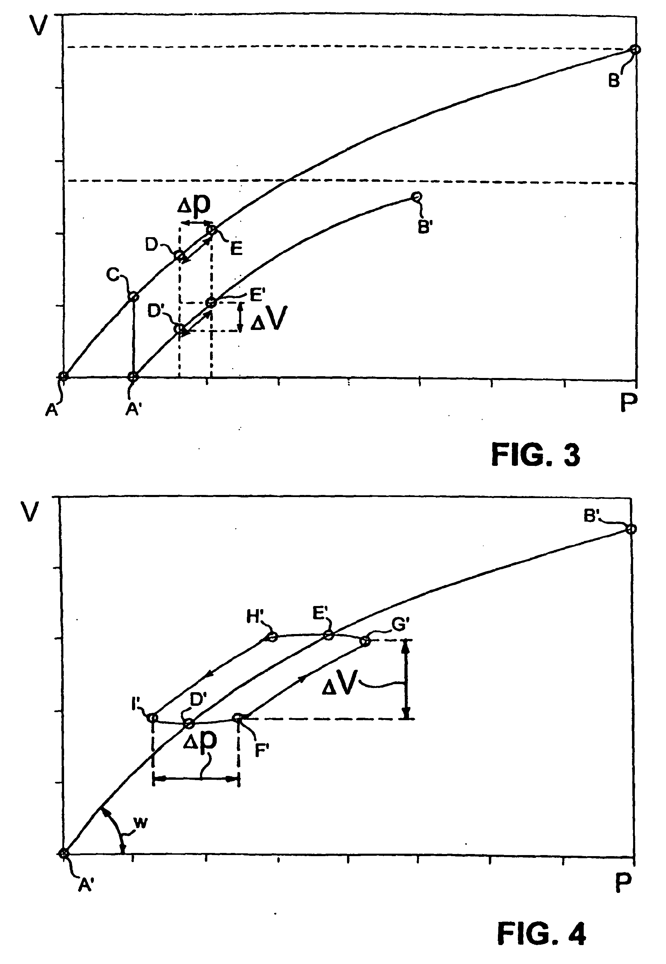

Anhand der Fig. 3 und 4 sollen die Begriffe Volumenaufnahme, Hysterese und Elastizität der Vorrichtung abschließend noch näher erläutert werden.

In Fig. 3 sind idealisierte Kennlinien der Volumenaufnahme V von Vorrichtungen zur Reduzierung von Schwingungen als Funktion des Drucks P aufgetragen, wobei die Kennlinie AB eine Vorrichtung ohne Federelement repräsentiert, während die Kennlinie A'B' eine Vorrichtung repräsentiert, bei der die gleiche Membran wie oben beschrieben mittels eines Federelements entgegen der Duckbeaufschlagungsrichtung an eine druckkammerseitige Stützfläche gedrückt ist. Es ist ersichtlich, daß infolge des Vorsehens des Federelements die Kennlinie AB aus dem Nullpunkt A im wesentlichen parallel entlang der Druckachse P zur Kennlinie A'B' verschoben wird. Somit ist im Punkt A' der neuen Kennlinie A'B' die Gesamt-Volumenaufnahme bei gleichem Betriebs- oder Betätigungsdruck gegenüber der Kennlinie AB ohne Federelement um den Betrag A'C verringert. Ober die exemplarisch dargestellte Betriebsstrecke DE bzw. D'E' auftretende Druckschwankungen Δp haben dennoch eine im wesentlichen gleiche relative Volumenaufnahme ΔV der Vorrichtungen zur Folge.

Im Ergebnis kann mittels des Federelements die Gesamt-Volumenaufnahme der Vorrichtung gesteuert werden, wobei steifere Federelemente eine im Verhältnis weitere Verschiebung der Kennlinie nach rechts in Fig. 3 bewirken. Eine Anpassung der Vorrichtung an das jeweilige hydraulische Kraftübertragungssystem, in das die Vorrichtung eingebaut werden soll, kann somit auf einfache Weise erfolgen. Außerdem kann unter einer Reduzierung von Schwingungen das Betätigungsverhalten des hydraulischen Kraftübertragungssystems leicht im Sinne einer härteren Pedalcharakteristik und eines verkürzten Pedalwegs optimiert werden.

Die Fig. 4 veranschaulicht die Hysterese und die Elastizität der Vorrichtung über eine theoretische Betriebsstrecke D'E' auf der idealisierten Volumen-Druck-Kennlinie A'B'. Ausgehend vom Betriebspunkt D' muß der Druck P um den Betrag D'F' erhöht werden, damit eine Volumenaufnahme ΔV vom Punkt F' bis zum Punkt G' erfolgen kann. Der Abschnitt F'G' verläuft dabei unterhalb der theoretischen Betriebsstrecke D'E' aber parallel zu dieser. Dieser Kennungsversatz um den halben Druckverlust Δp wird Hysterese genannt und ist bedingt durch die spezifischen Reibungs- und Setzverluste der Vorrichtung. Hierbei machen bei der oben beschriebenen Vorrichtung die Setzverluste nur einen vernachlässigbaren Bruchteil aus, während das Gros der Verluste auf Reibung zurückgeht. Bei der anschließenden Druckverringerung über den Abschnitt G'H' bleibt das Volumen V der Vorrichtung im wesentlichen konstant, um dann oberhalb der theoretischen Betriebsstrecke D'E' auf dem Abschnitt H'I' auf das Volumen V im Punkt I' abzufallen. Ohne weitere Änderung des Volumens V wächst dann der Druck P entlang der Strecke I'D' wieder auf den Druck P im Punkt D'. Ober die Abschnitte H'I' und I'D' setzen sich die beteiligten Teile der Vorrichtung unter Reibung.

Somit wird die Hysterese der Vorrichtung für die theoretische Betriebsstrecke D'E' in der idealisierten Kennlinie A'B' durch den Streckenzug F'G'H'I' bei hydraulischer Be- und Entlastung der Vorrichtung beschrieben, während das Verhältnis von Druckverlust Δp und Volumenänderung ΔV (I'F' / F'G' bzw. G'H' / H'I') als Elastizität der Vorrichtung bezeichnet werden kann.

Um die größtmögliche Sensibilität oder ein dem jeweiligen hydraulischen Kraftübertragungssystem angepaßtes Ansprechverhalten der Vorrichtung zu erzielen, bei dem schon geringe Druckzunahmen Δp in der Flüssigkeitssäule zu einer Auslenkung der Membran bzw. einer Volumenaufnahme ΔV der Vorrichtung und damit einer Schwingung der Membran führen, muß die Elastizität Δp / ΔV der Vorrichtung möglichst klein sein. Dies wird bewerkstelligt durch eine Vergrößerung des Verhältnisses von Durchmesser zu Dicke der Membran, wobei erst das oben beschriebene Federelement eine derartige Vergrößerung gestattet, ohne daß die Membran im Betrieb Schaden nimmt. Eine Vergrößerung des Verhältnisses von Durchmesser zu Dicke der Membran bei der Vorrichtung mit der idealisierten Kennlinie A'B' gemäß Fig. 4 führt zu einem hier nicht dargestellten steileren Kennlinienverlauf, d.h. einem Verlauf der Kennlinie unter einem größeren Steigungswinkel w. Es ist ersichtlich, daß bei einer dementsprechend um den Punkt A' in Fig. 4 entgegen dem Uhrzeigersinn verschwenkten steileren Kennlinie das Verhältnis von Druckverlust Δp zu Volumenaufnahme ΔV verringert ist.

Es wird eine Vorrichtung zur Reduzierung von Schwingungen in einem hydraulischen Kraftübertragungssystem offenbart, welches einen Geberzylinder und einen damit über eine Flüssigkeitssäule verbundenen Nehmerzylinder aufweist. Die Vorrichtung hat ein Gehäuse und eine Membran, die mit ihrem Rand am Gehäuse befestigt ist. Das Gehäuse und die Membran begrenzen eine Kammer, welche über einen Anschluß mit dem Geberzylinder und über einen weiteren Anschluß mit dem Nehmerzylinder verbindbar ist, so daß die Membran von der Flüssigkeitssäule zwischen Geberzylinder und Nehmerzylinder hydraulisch beaufschlagbar ist. Erfindungsgemäß ist die Membran zumindest im Ruhezustand des hydraulischen Kraftübertragungssystems mittels eines Federelements entgegen der Richtung der hydraulischen Beaufschlagung der Membran an eine kammerseitige Stützfläche gedrückt, wobei das Federelement die Membran an einem mittigen Abschnitt beaufschlagt und die Membran wenigstens in einem Ringbereich zum Schwingen anregbar ist, der sich in radialer Richtung gesehen zwischen der Stützfläche und dem am Gehäuse befestigten Rand der Membran befindet. Im Ergebnis wird eine einfach ausgebildete Vorrichtung zur Reduzierung von Schwingungen in einem hydraulischen Kraftübertragungssystem geschaffen, welche leicht hinsichtlich Ansprechverhalten und Volumenaufnahme den jeweiligen Erfordernissen entsprechend angepaßt werden kann.

### Bezugszeichenliste

- 10: Gehäuse
- 12: Membran
- 14: Rand
- 16: Kammer
- 18: Anschluß
- 20: Anschluß
- 22: Federelement
- 24: Stützfläche
- 26: Boden
- 28: Vorsprung
- 30: ringzylindrischer Abschnitt
- 32: Ringnut
- 34: Dichtelement
- 36: Stirnfläche
- 38: Verbindungskanal
- 40: Verbindungskanal
- 42: Durchgangsbohrung
- 44: ringzylindrischer Abschnitt
- 46: Stirnfläche
- 48: Deckel
- 50: Ringfläche
- 52: Außengewindeabschnitt
- 54: Innengewindeabschnitt
- 56: Außendurchmesser des Gewindeprofils
- 58: Innendurchmesser des Gewindeprofils
- 60: Ringnut
- 62: Dichtelement
- 64: Dichtabschnitt
- 66: Innenmehrkant
- 68: Aufnahme- und Führungsabschnitt
- 70: Ringraum
- 72: Ringraum
- 74: Vorsprung
- 76: ringzylindrischer Abschnitt
- 78: Stirnfläche
- 80: Bundbüchse
- 82: Ringbund
- 84: Stirnfläche
- 86: umlaufender Vorsprung
- 88: umlaufender Vorsprung
- 90: Sicherungselement

- V: Volumen
- P: Druck

## Patentansprüche

1. Vorrichtung zur Reduzierung von Schwingungen in einem hydraulischen Kraftübertragungssystem, welches einen Geberzylinder und einen damit über eine Flüssigkeitssäule verbundenen Nehmerzylinder aufweist, mit einem Gehäuse (10) und einer Membran (12), die mit ihrem Rand (14) am Gehäuse (10) befestigt ist, wobei das Gehäuse (10) und die Membran (12) eine Kammer (16) begrenzen, welche über einen Anschluß (20) mit dem Geberzylinder und über einen weiteren Anschluß (18) mit dem Nehmerzylinder verbindbar ist, so daß die Membran (12) von der Flüssigkeitssäule zwischen Geberzylinder und Nehmerzylinder hydraulisch beaufschlagbar ist, **dadurch gekennzeichnet, daß** die Membran (12) zumindest im Ruhezustand des hydraulischen Kraftübertragungssystems mittels eines Federelements (22) entgegen der Richtung der hydraulischen Beaufschlagung der Membran (12) an eine kammerseitige Stützfläche (24) gedrückt ist, wobei das Federelement (22) die Membran (12) an einem mittigen Abschnitt beaufschlagt und die Membran (12) wenigstens in einem Ringbereich zum Schwingen anregbar ist, der sich in radialer Richtung gesehen zwischen der Stützfläche (24) und dem am Gehäuse (10) befestigten Rand (14) der Membran (12) befindet.

2. Vorrichtung nach Anspruch 1, **dadurch gekennzeichnet, daß** das Gehäuse (10) einen sich mittig von einem Boden (26) der Kammer (16) in Richtung der Membran (12) erstreckenden Vorsprung (28) aufweist, der die Stützfläche (24) ausbildet.

3. Vorrichtung nach Anspruch 1 oder 2, **dadurch gekennzeichnet, daß** das Gehäuse (10) eine die Kammer (16) konzentrisch umgebende Ringnut (32) zur Aufnahme eines an der Membran (12) anliegenden Dichtelements (34) hat, welches die Kammer (16) zur Umgebung hin abdichtet.

4. Vorrichtung nach Anspruch 3, **dadurch gekennzeichnet, daß** das Gehäuse (10) zwischen der Kammer (16) und der Ringnut (32) einen ringzylindrischen Abschnitt (30) aufweist, an dem die Membran (12) zumindest im Ruhezustand des hydraulischen Kraftübertragungssystems anliegt, wobei der ringzylindrische Abschnitt (30) mit mindestens einem Verbindungskanal (38) versehen ist, der die Kammer (16) mit der Ringnut (32) verbindet.

5. Vorrichtung nach Anspruch 4, **dadurch gekennzeichnet, daß** eine Stirnfläche (36) des ringzylindrischen Abschnitts (30) und die Stützfläche (24) am Vorsprung (28) in einer Ebene liegen, so daß die durch das Federelement (22) belastete Membran (12) im Ruhezustand des hydraulischen Kraftübertragungssystems eben gehalten ist.

6. Vorrichtung nach einem der vorhergehenden Ansprüche, **dadurch gekennzeichnet, daß** am im wesentlichen topfförmigen Gehäuse (10) ein Deckel (48) vorgesehen ist, der zusammen mit dem Gehäuse (10) die Membran (12) an ihrem Rand (14) einspannt, wobei sich das Federelement (22) mit seinem von der Membran (12) abgewandten Ende am Deckel (48) abstützt.

7. Vorrichtung nach Anspruch 6, **dadurch gekennzeichnet, daß** der Deckel (48) mittels einer Gewindeverbindung am Gehäuse (10) befestigt ist, wobei der Deckel (48) einen Außengewindeabschnitt (52) hat, der in einen Innengewindeabschnitt (54) des Gehäuses (10) einschraubbar ist.

8. Vorrichtung nach Anspruch 7, **dadurch gekennzeichnet, daß** die Gewindeverbindung sowohl sägen- als auch rundgewindeähnlich ausgebildet ist, derart, daß zumindest der Innengewindeabschnitt (54) des Gehäuses (10) am Außendurchmesser (56) des Gewindeprofils rundgewindeähnlich gerundet ist und am Innendurchmesser (58) des Gewindeprofils eine gerundete sägengewindeähnliche Form aufweist.

9. Vorrichtung nach einem der Ansprüche 6 bis 8, **dadurch gekennzeichnet, daß** der Deckel (48) einen mittigen Aufnahme- und Führungsabschnitt (68) für das Federelement (22) hat.

10. Vorrichtung nach einem der vorhergehenden Ansprüche, **dadurch gekennzeichnet, daß** es sich bei dem Federelement (22) um eine Schraubendruckfeder handelt.

11. Vorrichtung nach Anspruch 10, **dadurch gekennzeichnet, daß** das Federelement (22) konzentrisch von einer Bundbüchse (80) umgeben ist, die einen Ringbund (82) aufweist, der zwischen dem der Membran (12) zugewandten Ende des Federelements (22) und der Membran (12) angeordnet ist.

12. Vorrichtung nach Anspruch 11, **dadurch gekennzeichnet, daß** die der Membran (12) zugewandte Stirnfläche (84) des Ringbunds (82) eben ausgebildet ist.

13. Vorrichtung nach Anspruch 11 oder 12, **dadurch gekennzeichnet, daß** die Bundbüchse (80) in dem Aufnahme- und Führungsabschnitt (68) des Deckels (48) axial bewegbar geführt ist.

14. Vorrichtung nach Anspruch 13, **dadurch gekennzeichnet, daß** die Bundbüchse (80) an ihrem von der Membran (12) abgewandten Ende außenumfangsseitig mit einem umlaufenden Vorsprung (86) versehen ist, während der Aufnahme- und Führungsabschnitt (68) des Deckels (48) an seinem der Membran (12) zugewandten Ende innenumfangsseitig einen umlaufenden Vorsprung (88) aufweist, wobei der umlaufende Vorsprung (86) der Bundbüchse (80) einen Außendurchmesser hat, der geringfügig größer ist als der Innendurchmesser des umlaufenden Vorsprungs (88) am Aufnahme- und Führungsabschnitt (68) des Deckels (48).

15. Vorrichtung nach einem der vorhergehenden Ansprüche, **dadurch gekennzeichnet, daß** die Membran (12) aus Federstahl besteht.

16. Vorrichtung nach Anspruch 15, **dadurch gekennzeichnet, daß** das Verhältnis von Durchmesser zu Dicke der Membran (12) zwischen 40 und 160, mehr bevorzugt zwischen 60 und 90 liegt.

17. Vorrichtung nach zumindest dem Patentanspruch 1, 6 bzw. 11, **dadurch gekennzeichnet, daß** das Gehäuse (10) und/oder der Deckel (48) und/oder die Bundbüchse (80) aus Kunststoff spritzgegossen ist.

18. Hydraulisches Kraftübertragungssystem mit einem Nehmerzylinder, der über eine Flüssigkeitssäule mit einem Geberzylinder wirkverbunden ist, und mit einer in die Flüssigkeitssäule zwischen Nehmerzylinder und Geberzylinder geschalteten Vorrichtung zur Reduzierung von Schwingungen nach einem der vorhergehenden Ansprüche, welche mit ihrem entsprechenden Anschluß (20) unmittelbar mit dem Geberzylinder steckverbunden ist oder deren Gehäuse integraler Bestandteil des Gehäuses des Geberzylinders ist.

## Claims

1. Device for reducing vibrations in a hydraulic power transmission system which has a master cylinder and a slave cylinder connected to this via a fluid column, comprising a housing (10) and a membrane (12) which is attached with its edge (14) to the housing (10), wherein the housing (10) and the membrane (12) delimit a chamber (16) which can be connected via a connection (20) to the master cylinder and via a further connection (18) to the slave cylinder, so that the membrane (12) can be loaded hydraulically by the fluid column between the master cylinder and the slave cylinder, **characterized in that** the membrane (12) at least in a rest state of the hydraulic power transmission system is pressed by means of a spring element (22) against the direction of the hydraulic loading of the membrane (12) against a support surface (24) on the chamber side, wherein the spring element (22) loads the membrane (12) at a central section, and the membrane (12) can be excited to vibrate at least in a ring area which, viewed in the radial direction, is located between the support surface (24) and the edge (14) of the membrane (12) which is attached to the housing (10).

2. Device according to claim 1, **characterized in that** the housing (10) has a projection (28), extending centrally from a base (26) of the chamber (16) in the direction of the membrane (12), which forms the support surface (24).

3. Device according to claim 1 or 2, **characterized in that** the housing (10) has an annular groove (32) surrounding the chamber (16) concentrically to hold a sealing element (34) lying on the membrane (12) which seals the chamber (16) against the environment.

4. Device according to claim 3, **characterized in that** the housing (10) between the chamber (16) and the annular groove (32) has a ring-cylindrical section (30) on which the membrane (12) lies at least in the rest state of the hydraulic power transmission system, wherein the ring-cylindrical section (30) has at least one connecting channel (38) which connects the chamber (16) with the annular groove (32).

5. Device according to claim 4, **characterized in that** a face surface (36) of the ring-cylindrical section (30) and the support surface (24) on the projection (28) lie in one plane so that the membrane (12) loaded by the spring element (22) is held flat in the rest state of the hydraulic power transmission system.

6. Device according to one of the preceding claims, **characterized in that** on the essentially pot-shaped housing (10) is provided a cover (48) which together with the housing (10) clamps the membrane (12) at its edge (14), wherein the spring element (22) rests with its end facing away from the membrane (12) on the cover (48).

7. Device according to claim 6, **characterized in that** the cover (48) is attached to the housing (10) by means of a threaded connection, wherein the cover (48) has an external threaded section (52) which can be screwed into an internal threaded section (54) of the housing (10).

8. Device according to claim 7, **characterized in that** the threaded connection is formed as both sawtooth and round thread-like such that at least the internal threaded section (54) of the housing (10) is rounded in a round thread-like manner at the external diameter (56) of the thread profile and at the internal diameter (58) of the thread profile has a rounded sawtooth thread-like form.

9. Device according to one of the claims 6 to 8, **characterized in that** the cover (48) has a central receiving and guiding section (68) for the spring element (22).

10. Device according to one of the preceding claims, **characterized in that** the spring element (22) is a coil compression spring.

11. Device according to claim 10, **characterized in that** the spring element (22) is surrounded concentrically by a flange sleeve (80) which has a ring collar (82) arranged between the end of the spring element (22) facing the membrane (12) and the membrane (12).

12. Device according to claim 11, **characterized in that** the face surface (84) of the ring collar (82) facing the membrane (12) is formed flat.

13. Device according to claim 11 or 12, **characterized in that** the flange sleeve (80) is guided axially mobile in the receiving and guiding section (68) of the cover (48).

14. Device according to claim 13, **characterized in that** the flange sleeve (80) at its end facing away from the membrane (12) has on its outer periphery a peripheral projection (86) while the receiving and guiding section (68) of the cover (48) at its end facing the membrane (12) has on its inner periphery a peripheral projection (88), wherein the peripheral projection (86) of the flange sleeve (80) has an external diameter which is slightly larger than the internal diameter of the peripheral projection (88) on the receiving and guiding section (68) of the cover (48).

15. Device according to one of the preceding claims, **characterized in that** the membrane (12) is made of spring steel.

16. Device according to claim 15, **characterized in that** the ratio of diameter to thickness of the membrane (12) is between 40 and 160, more preferably between 60 and 90.

17. Device according at least to claim 1, 6 or 11, **characterized in that** the housing (10) and/or the cover (48) and/or the flange sleeve (80) are injection-molded of plastic.

18. Hydraulic power transmission system with a slave cylinder which is actively connected via a fluid column with a master cylinder, and with a device according to one of the preceding claims connected in the fluid column between the slave cylinder and the master cylinder to reduce vibrations, which with its corresponding connection (20) is plug-connected directly to the master cylinder or the housing of which is an integral part of the housing of the master cylinder.

## Revendications

1. Dispositif pour la réduction des oscillations dans un système hydraulique de transmission de force qui comprend un cylindre émetteur et un cylindre récepteur relié à celui-ci via une colonne de liquide, comportant un boîtier (10) et une membrane (12) fixée par son bord (14) sur le boîtier (10), le boîtier (10) et la membrane (12) délimitant une chambre (16) qui est susceptible d'être reliée au cylindre émetteur via un raccord (20) et au cylindre récepteur via un autre raccord (18), de sorte que la membrane (12) est susceptible d'être sollicitée par voie hydraulique par la colonne de liquide entre le cylindre émetteur et le cylindre récepteur, **caractérisé en ce qu'**au moins dans l'état de repos du système hydraulique de transmission de force, la membrane (12) est pressée contre une surface d'appui (24) côté chambre au moyen d'un élément à ressort (22) en sens opposé à la direction de la sollicitation hydraulique de la membrane (12), l'élément à ressort (22) sollicitant la membrane (12) au niveau d'un tronçon médian et la membrane (12) étant susceptible d'être excitée à osciller au moins dans une zone annulaire qui, vue en direction radiale, est située entre la surface d'appui (24) et le bord (14) de la membrane (12) fixé sur le boîtier (10).

2. Dispositif selon la revendication 1, **caractérisé en ce que** le boîtier (10) présente une saillie (28) qui s'étend au milieu à partir d'un fond (26) de la chambre (16) en direction de la membrane (12) et qui constitue la surface d'appui (24).

3. Dispositif selon l'une ou l'autre des revendications 1 et 2, **caractérisé en ce que** le boîtier (10) possède une gorge annulaire (32) entourant concentriquement la chambre (16) et destinée à recevoir un élément d'étanchéité (34) qui s'appuie contre la membrane (12) et qui étanche la chambre (16) par rapport à l'environnement.

4. Dispositif selon la revendication 3, **caractérisé en ce que** le boîtier (10) comprend un tronçon cylindrique annulaire (30) entre la chambre (16) et la gorge annulaire (32), contre lequel la membrane (12) s'appuie au moins dans l'état de repos du système hydraulique de transmission de force, le tronçon cylindrique annulaire (30) étant pourvu d'au moins un canal de liaison (38) qui relie la chambre (16) à la gorge annulaire (32).

5. Dispositif selon la revendication 4, **caractérisé en ce qu'**une surface frontale (36) du tronçon cylindrique annulaire (30) et la surface d'appui (24) sur la saillie (28) se trouvent dans un seul plan, de sorte que la membrane (12) chargée par l'élément à ressort (22) est maintenue à plat dans l'état de repos du système hydraulique de transmission de force.

6. Dispositif selon l'une des revendications précédentes, **caractérisé en ce qu'**il est prévu sur le boîtier (10) sensiblement en forme de pot un couvercle (48) qui, conjointement avec le boîtier (10), serre la membrane (12) par son bord (14), l'élément à ressort (22) prenant appui contre le couvercle (48) par son extrémité détournée de la membrane (12).

7. Dispositif selon la revendication 6, **caractérisé en ce que** le couvercle (48) est fixé sur le boîtier (10) au moyen d'une liaison vissée, le couvercle (48) présentant un tronçon fileté (52) qui est susceptible d'être vissé dans un tronçon taraudé (54) du boîtier (10).

8. Dispositif selon la revendication 7, **caractérisé en ce que** la liaison vissée est réalisée aussi bien à la manière d'un filet en dent de scie qu'à la manière d'un filet rond, de telle sorte qu'au moins le tronçon taraudé (54) du boîtier (10) sur le diamètre extérieur (56) du profilé à pas de vis est arrondi à la manière d'un filet rond et présente une forme arrondie à la manière d'un filet en dent de scie sur le diamètre intérieur (58) du profilé à pas de vis.

9. Dispositif selon l'une des revendications 6 à 8, **caractérisé en ce que** le couvercle (48) possède un tronçon médian (68) de réception et de guidage de l'élément à ressort (22).

10. Dispositif selon l'une des revendications précédentes, **caractérisé en ce que** l'élément à ressort (22) est un ressort hélicoïdal de compression.

11. Dispositif selon la revendication 10, **caractérisé en ce que** l'élément à ressort (22) est entouré concentriquement par une douille à collier (80) qui comprend un collier annulaire (82) qui est agencé entre l'extrémité de l'élément à ressort (22) tournée vers la membrane (12) et la membrane (12).

12. Dispositif selon la revendication 11, **caractérisé en ce que** la surface frontale (84) du collier annulaire (82) tournée vers la membrane (12) est réalisée plane.

13. Dispositif selon l'une ou l'autre des revendications 11 et 12, **caractérise en ce que** la douille à collier (80) est guidée avec faculté de translation axiale dans le tronçon de réception et de guidage (68) du couvercle (48).

14. Dispositif selon la revendication 13, **caractérisé en ce que** sur son extrémité détournée de la membrane (12), la douille à collier (80) est pourvue d'une saillie périphérique (86) du côté périphérie extérieure, tandis que le tronçon de réception et de guidage (68) du couvercle (48) comprend, sur son extrémité tournée vers la membrane (12), une saillie périphérique (88) du côté périphérie intérieure, la saillie périphérique (86) de la douille à collier (80) présentant un diamètre extérieur qui est légèrement supérieur au diamètre intérieur de la saillie périphérique (88) sur le tronçon de réception et de guidage (68) du couvercle (48).

15. Dispositif selon l'une des revendications précédentes, **caractérisé en ce que** la membrane (12) est constituée d'acier ressort.

16. Dispositif selon la revendication 15, **caractérisé en ce que** le rapport du diamètre sur l'épaisseur de la membrane (12) est compris entre 40 et 160, de préférence entre 60 et 90.

17. Dispositif selon l'une des revendications 1, 6 ou 11, **caractérisé en ce que** le boîtier (10) et/ou le couvercle (48) et/ou la douille à collier (80) est/sont moulé(s) par injection en matière plastique.

18. Système hydraulique de transmission de force comportant un cylindre récepteur qui est relié à un cylindre émetteur via une colonne de liquide, et comportant un dispositif branché dans la colonne de liquide entre le cylindre récepteur et le cylindre émetteur et destiné à réduire des oscillations, selon l'une des revendications précédentes, dispositif qui est relié par enfichage de son raccord correspondant (20) immédiatement au cylindre émetteur ou dont le boîtier fait partie intégrale du boîtier du cylindre émetteur.
